# EUROPEAN PATENT SPECIFICATION

(11) **EP 4 588 073 B1**
(45) Date of publication and mention of the grant of the patent: **26.11.2025**
(21) Application number: 23768508.6
(22) Date of filing: 07.09.2023
(51) Int. Cl.: G21C 13/073, G21C 21/00, G21C 19/19

(54) **CLOSURE HEAD MOUNTING FIXTURE**
VERSCHLUSSKOPFMONTAGEVORRICHTUNG
FIXATION DE MONTAGE DE TÊTE DE FERMETURE

(30) Priority: 14.09.2022 GB 202213469
(43) Date of publication of application: 23.07.2025
(73) Proprietor: Rolls-Royce SMR Limited, Derby, Derbyshire DE24 8BJ (GB)
(72) Inventor: THACKSTONE, Carl David, Derby DE24 8BJ (GB)
(74) Representative: Mewburn Ellis LLP
(86) International application number: PCT/EP2023/074583
(87) International publication number: WO 2024/056514

(56) References cited:
- JP-A- H06 347 581
- US-A- 5 700 988

## Description

### Field of the Invention

The present invention relates to a fixture for mounting a closure head of a nuclear reactor pressure vessel during manufacture of the closure head.

### Background

Nuclear power plants convert heat energy from the nuclear decay of fissile material contained in fuel assemblies within a reactor core into electrical energy. Water-cooled reactor nuclear power plants, such as pressurised water reactor (PWR) and boiling water reactor (BWR) plants, include a reactor pressure vessel (RPV), which contains the reactor core/fuel assemblies, and a turbine for generating electricity from steam produced by heat from the fuel assemblies.

Conventional nuclear power plants can have a power output of approximately 1600MWe. However, the footprint and capital costs of conventional nuclear power plants are high.

To reduce the required footprint and/or to reduce the capital cost, small or medium modular reactors (SMRs) can be used. Small or medium modular reactors (SMRs) can produce up to approximately 700MWe. They are referred to as modular reactors because they are assembled from modular units manufactured in a factory setting and then transported to site for fitting together. The economy of scale that can be achieved from modular construction means that SMRs can be a more economically viable option than a conventional nuclear power plant that has high capital costs.

The RPV typically comprises a body defining a cavity for containing the reactor core/fuel assemblies and a closure head for closing an upper opening to the cavity. The closure head generally forms part of an integrated head package (IHP) which further comprises of a number of control rod drive mechanisms within the IHP structure. Each control rod drive mechanism can comprise a number of drive rods which pass through the closure head and are connected to control rods contained within the reactor core. The control rods are provided to absorb neutron radiation within the core and thus control the nuclear reactions within the reactor core. The drive rods within each control rod drive mechanism are powered by a power supply which controls a lifting device that is used to vertically raise and lower the control rods within the reactor core.

The closure head of an RPV is a complex and heavy component that needs to undergo many manufacturing operations. For example, a closure head may weigh about 40 tons, and when combined with the rest of the IHP, the total weight can be about 120 tons. This presents a challenge when moving a closure head between manufacturing operations in a factory, not only because of the weight of the closure head, but because of the need to avoid damage during the manufacturing process. In particular, a control rod latch assembly housing and control rod guide tubes (also known as adaptor tubes) which penetrate through the closure head can be easily damaged, and if damaged can cause major rework, delays or scrapping.

US 5700988 proposes a device for fixing a through tube in a dome-shaped wall of a component of a nuclear reactor.

The present invention has been devised in light of the above considerations.

### Summary of the Invention

In a first aspect, the present disclosure provides a fixture for mounting a closure head of a nuclear reactor pressure vessel during manufacture of the closure head, the closure head having a central section for penetration therethrough by control rod guide tubes and a peripheral section containing a circumferential row of through holes corresponding to positions of bolt holes by which, in use, the closure head is bolted to the reactor pressure vessel, the fixture having:
a support ring providing a circumferential row of upstanding projections which are matingly engageable through respective holes of the circumferential row of holes of the peripheral section of the closure head to mount the closure head on the support ring; and
an underframe for holding the support ring and closure head mounted thereon off the ground.

The holes of the peripheral section provide a convenient means for holding the closure head on the support ring. Typically the fixture is a transportation fixture on which the closure head is moved, e.g. using a guided vehicle, or via a crane, between manufacturing operations. In this case, the fixture has particular utility as a means for safely moving the head from location to location within a factory setting. Typically the central section of the closure head is dome-shaped, and is mounted to the support ring with convex side of the closure head facing downwards.

The upstanding projections may form fastening points for fastening thereto of lifting gear, whereby when the closure head is mounted on the support ring, lifting performed using lifting gear fastened to the fastening points lifts the closure head as well as, optionally, the support ring and the underframe. For example, the fastening points may be threaded holes formed in the upstanding projections for fastening thereto of lifting gear eye bolts. A first group of the upstanding projections may be provided by a first portion of the support ring which rigidly joins to the underframe, and a second group of the upstanding projections may be provided by plural second portions of the support ring which are liftably detachable from the first portion, the first and second groups of upstanding projections forming respectively first and second fastening points for fastening thereto of lifting gear, whereby when a closure head is mounted on the support ring, lifting performed using lifting gear fastened to the first fastening points lifts the closure head as well as the support ring and underframe, and lifting performed using lifting gear fastened to just the second fastening points lifts the closure head and just the second portions of the support ring. In this way, by choosing the first or second group of projections for a lifting operation at a given location, the closure head can be lifted either with or without the underframe, depending on a type of manufacturing operation to be performed. Conveniently, the second portions of the support ring may be housed in respective recesses formed in the first portion. When the closure head lifted by the second group of projections is returned to the underframe, the second portions are then simply rehoused into their respective recesses. Typically, the first group of upstanding projections may be formed by an integer number, N, of first subgroups of adjacent upstanding projections, and the second group of upstanding projections may be formed by N second subgroups of adjacent upstanding projections, the first and second subgroups being arranged in an alternating pattern around the support ring. For example, N may be 3 or 4, which can provide a stable lifting configuration.

Conveniently, the fastening points (specifically the first fastening points when first and second groups of upstanding projections forming respectively first and second fastening points) can be used to clamp the closure head to the fixture when they are being moved from location to location between manufacturing operations. They can also be used to clamp the closure head to the fixture when a particular manufacturing operation requires the closure head to be mounted on the underframe and the operation involves tilting or movement of the closure head. For example, cladding operations may be performed in which the closure head is mounted on the underframe, which in turn is attached to a manipulator that rotates the closure head by up to 90° on its side.

Advantageously, the first and second fastening points may be differently configured such that lifting gear fastenable to the first fastening points is not fastenable to the second fastening points, and lifting gear fastenable to the second fastening points is not fastenable to the first fastening points. For example, when the fastening points are threaded holes formed in the upstanding projections for fastening thereto of lifting gear eye bolts, the threaded holes formed in the first group of upstanding projections may have different threads and/or different diameters to the threaded holes formed in the second group of upstanding projections. In this way, the fixture provides a "poka-yoke" type of arrangement that prevents the closure head being wrongly lifted either with the fixture when the fixture is not needed for the forthcoming manufacturing operation, or without the fixture when it is needed for the operation.

The underframe may be configured to shield control rod guide tubes penetrating through the central section from accidental damage. For example, the underframe may have a guard portion which extends from a base of the underframe to the support ring and thereby helps to protect the closure head. The guard portion may be a solid wall, or may have apertures formed therein so that the underside of the closure head is visible from the outside the fixture. Conveniently, the underframe may have at least one opening formed therein to allow human or manipulator access to the underside of the closure head.

The underframe may be generally cylindrical in shape, e.g. to match a generally circular peripheral section of the closure head. However, other shapes for the underframe are also possible, such as a generally prismatic columnar shape, e.g. with a square cross-section.

The fixture may have rotation formations, e.g. trunions at top and bottom ends of the underframe, configured to facilitate rotation of the underframe and the support ring. This can be useful when a particular manufacturing operation requires the closure head to be rotated while being mounted on the fixture. An underframe having a generally prismatic columnar shape can be advantageous for such manipulations, as the fixture can be more easily balanced on the base of its underframe when it is rotated if that base has a straight edge about which it can pivot.

In a second aspect, the present disclosure provides a fixture system comprising the fixture of the first aspect as a first fixture and further comprising a detachable second fixture which holds the first fixture off the ground, for example to enable better access to ends of control rod guide tubes penetrating through the central section of the closure head. The detachable second fixture can have a second support ring for mounting thereon of a base of the first fixture and a second underframe for holding the second support ring and first fixture mounted thereon off the ground. The second support ring can provide a further circumferential row of upstanding projections which are matingly engageable through respective holes of the circumferential row of holes of the peripheral section of the closure head to mount the closure head on the second support ring. In this way, the second fixture can be used in place of the first fixture, if desired, to directly mount the closure head on the second support ring. The second fixture can be used in early stages of manufacture, e.g. as a supplementary welding or cladding fixture, or it can be used to accommodate changes in configuration of the IHP, such as changes in height of control latch assemblies which may only be decided during later design stages. Indeed, the second fixture can be set up to hold the first fixture off the ground in advance of the closure head arrival on the first fixture. Thus the second fixture can be attached or removed from the first fixture as needed. If removed, it can nonetheless be moved around a factory on the same guided vehicle as the first fixture and the closure head. The second fixture can be securely secured to the first fixture via a bolting arrangement. This may be in the form of plural nuts and bolts, each with a clevis pin type safety device, i.e. if the thread of a given bolt fails, the respective clevis pin is configured to hold the weight that was transmitted through the bolt.

In a third aspect, the present disclosure provides a fixture system comprising the fixture of the first aspect as a first fixture and further comprising a third fixture which fits over the closure head when the closure head is mounted to the first fixture, the third fixture locating on the peripheral portion of the closure head, and projecting upwardly therefrom. The third fixture can be clamped to the peripheral portion, e.g. via the threaded holes of the above-mentioned fastening points formed by the upstanding projections, allowing the closure head and the third fixture to be inverted so that the closure head mounts on the third fixture, which can in turn be rested on the ground. When the support ring has the first and second fastening points discussed above, by clamping the third fixture to the peripheral portion via the first fastening points, the first fixture can be inverted along with the closure head and the third fixture to locate the first fixture above the closure head. Alternatively, by clamping the third fixture to the peripheral portion via just the second fastening points, the first fixture can be detached from the closure head when it is inverted. For the former operation, the inversion can be performed using the above-mentioned rotation formations of the first fixture. For the latter operation, the third fixture may have its own further rotation formations, e.g. trunions at top and bottom ends thereof, configured to facilitate rotation of the third fixture. Advantageously, the third fixture allows operations to be performed on the closure head in an inverted state, e.g. with a dome-shaped central section of the closure head arranged with its convex side facing upwards. The third fixture can also help to protect the peripheral section of the closure head from accidental damage in a factory environment.

In a fourth aspect, the present disclosure provides a method of manufacturing a closure head of a nuclear reactor pressure vessel, the closure head having a central section for penetration therethrough by control rod guide tubes and a peripheral portion containing a circumferential row of through holes corresponding to positions of bolt holes by which, in use, the closure head is bolted to the reactor pressure vessel, the method including:
mounting the closure head on the support ring of the fixture of the first aspect by mating the upstanding projections of the support ring through respective holes of the peripheral section of the closure head; and
moving the closure head while mounted on the support ring between manufacturing operations.

Protective sleeves may be placed around the upstanding projections of the support ring before mating the upstanding projections through the holes of the peripheral section of the closure head. These sleeves may be changed as needed depending on the diameter of the holes which can be increased in size as manufacture of the head progresses.

When the support ring has the first group of the upstanding projections and the second group of the upstanding projections, the method may further include:
fastening lifting gear to the first fastening points and lifting thereby the closure head as well as the fixture; and
moving the lifted closure head and fixture to perform a manufacturing operation on the closure head in which the closure head is supported by the support ring of the fixture.

Similarly, when the support ring has the first group of the upstanding projections and the second group of the upstanding projections, the method may further include:
fastening lifting gear to just the second fastening points and lifting thereby the closure head as well as the second portions of the support ring; and
moving the lifted closure head and second portions of the support ring to perform a manufacturing operation on the closure head.

When the fixture is the first fixture of the fixture system of the second aspect, and when the upstanding projections form fastening points, the method may further include:
fastening lifting gear to the fastening points (e.g. to the first fastening points) and lifting thereby the closure head as well as the support ring and first fixture; and
lowering the closure head, support ring and first fixture onto the second fixture to hold the first fixture off the ground.

When the fixture is the first fixture of the fixture system of the third aspect, and when the upstanding projections form fastening points, the method may further include:
fitting the third fixture over the closure head, the third fixture locating on the peripheral portion of the closure head, and projecting upwardly therefrom;
clamping the third fixture to the peripheral portion of the closure head (e.g. via the first or second fastening points); and
inverting the third fixture and the closure head.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Figure 1 shows a simplified schematic of a reactor pressurise vessel;
Figure 2 shows a perspective bottom view of a closure head of the reactor pressurise vessel;
Figure 3 shows a schematic perspective view of a first fixture for the closure head;
Figure 4 shows a schematic side view of the closure head mounted on a support ring of the first fixture;
Figure 5 shows a schematic perspective view of the closure head being lifted off the first fixture;
Figure 6A shows schematically an upstanding projection provided by the support ring with a protective sleeve sized for one size of hole, and Figure 6B shows schematically the upstanding projection with a protective sleeve sized for a bigger hole;
Figure 7A shows a schematic side view of the first fixture and closure head being mounted onto a second fixture, Figure 7B shows a schematic side view of these components when the mounting operation is completed, and Figure 7C shows a schematic side view of the second fixture directly carrying the closure head; and
Figure 8A shows a schematic side view of the first fixture and closure head being fitted with a third fixture, Figure 8B shows a schematic side view of these components when the fitting operation is completed, and Figure 8C shows a schematic side view of the third fixture carrying the closure head after its inversion and removal from the first fixture.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

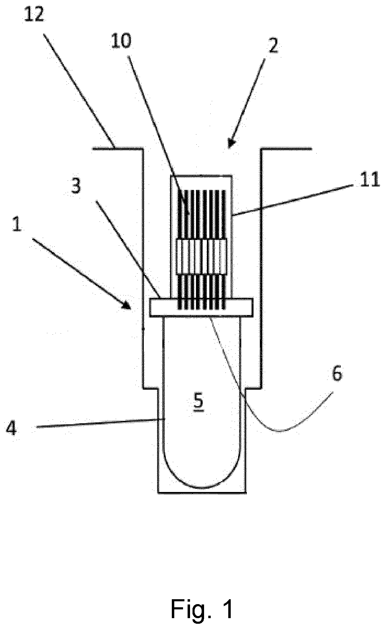

Figures 1 shows a reactor pressurise vessel (RPV) 1 for use in a nuclear power generation system of the PWR type. The RPV 1 is accommodated within a containment structure 12 and has a removable closure head assembly 2 which is an IHP having a closure head 3 for closing an upper opening in the RPV body 4 thereby sealing the fuel assemblies/reactor core (not shown) in a cavity 5 within the RPV body. The IHP further comprises a control rod drive mechanism 10 within a shroud 11.

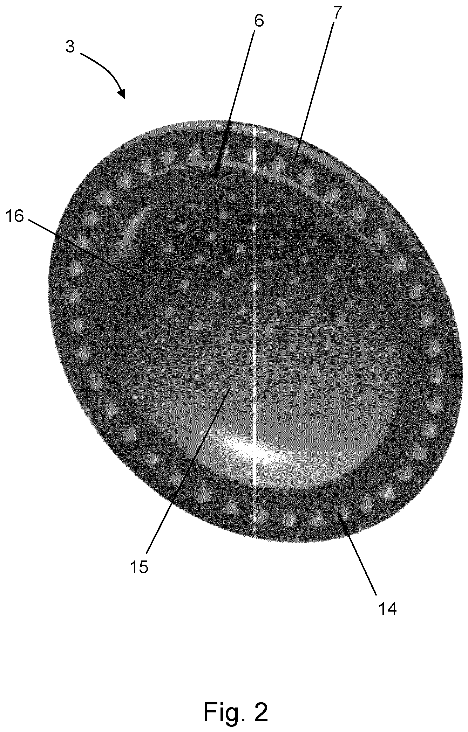

As shown in Figure 2, the closure head 3 has a sealing surface 6 at its lower axial end for sealing against the RPV body 4. The sealing surface 6 is annular and is surrounded by a peripheral annular flange 7 having a circumferential row of through holes 14 for receiving bolts which, in use, are tightened to seal the closure head onto the body 4 via a seal or seals located at the interface between the flange and the body. A central domed section 16 of the closure head contains further holes 15 for penetration therethrough of control rod guide tubes and a vent line.

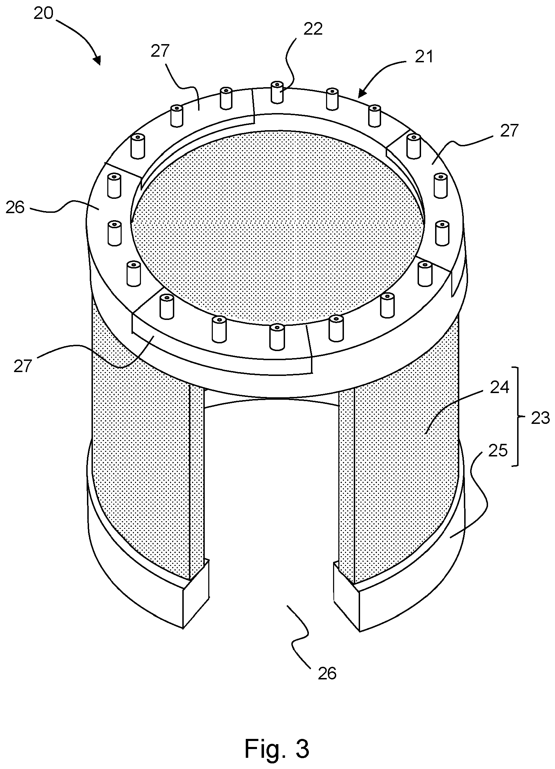

During manufacture of the closure head 3, it is moved from operation to operation in a factory to undergo successive fabrication processes, such as machining, welding, heat treating, fitting, testing etc. To facilitate this movement, and also to protect the closure head while it is in the factory from accidental damage, it is mounted on a first fixture 20, shown schematically in Figure 3, which can be carried on and moved around by guided vehicle, or moved via overhead crane if required.

The first fixture 20 has a support ring 21 providing a circumferential row of upstanding projections 22 which are matingly engageable through respective holes 14 of the circumferential row of holes of the peripheral annular flange 7 of the closure head 3 to mount the closure head on the support ring. Beneath the support ring is an underframe 23 for holding the support ring and the closure head when mounted thereon off the ground. The underframe includes a guard portion 24 which extends from a base 25 of the underframe to the support ring and helps to protect the closure head, and particularly control rod guide tubes when fitted thereto, from accidental damage in the factory environment. The guard portion can be a solid wall or have apertures formed therein so that the underside of the closure head is visible from the outside the first fixture (for example the guard portion can be formed from a circumferential row of columns or bars). Conveniently, the guard portion contains at least one opening 26 to allow the bottom-facing side of the closure head to be worked on while located on the first fixture.

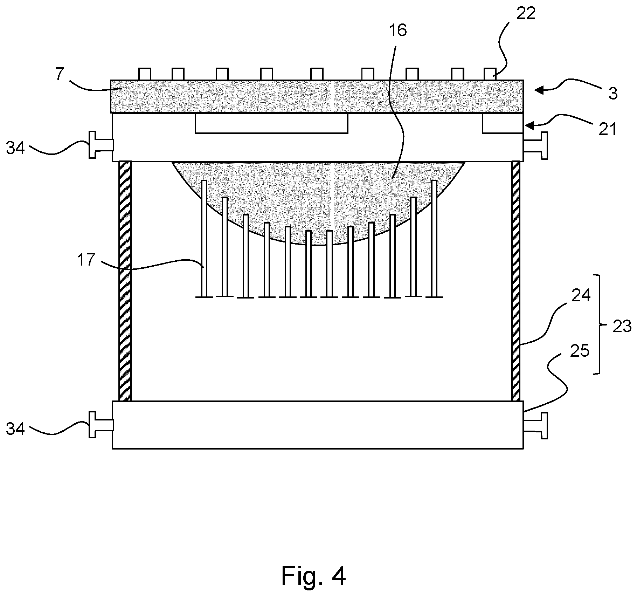

Figure 4 shows schematically a side view (although cross-sectional through the guard portion 24) of the closure head 3 mounted on the support ring 21 with the convex side of the domed portion 16 of the head facing downwards. Control rod guide tubes 17 fastened into the further holes 15 of the closure head extend downwards from the domed portion within the space created by the guard portion 24 of the underframe 23. The support ring 21 and the base 25 of the underframe 23 carry trunions 34 which are thus at opposite ends of the underframe and which facilitate rotation of the underframe and the support ring should a rotated position of the closure head be required for a particular manufacturing operation.

As seen best in Figure 3, the projections 22 are divided into two groups. The first group, consisting for example of half the projections, is provided by a first portion 26 of the support ring 21 which rigidly joins to the underframe 23. The second group, consisting of the other half of the projections, is provided by plural second portions 27 of the support ring which are liftably detachable from matching recess formed in the first portion. The first group is formed by an integer number, N (= 3 in Figure 3), of first subgroups of adjacent upstanding projections. Similarly, the second group is formed by N second subgroups of adjacent upstanding projections, each second subgroup being provided a respective second portion 27 of the support ring. These first and second subgroups are arranged in an alternating pattern around the support ring.

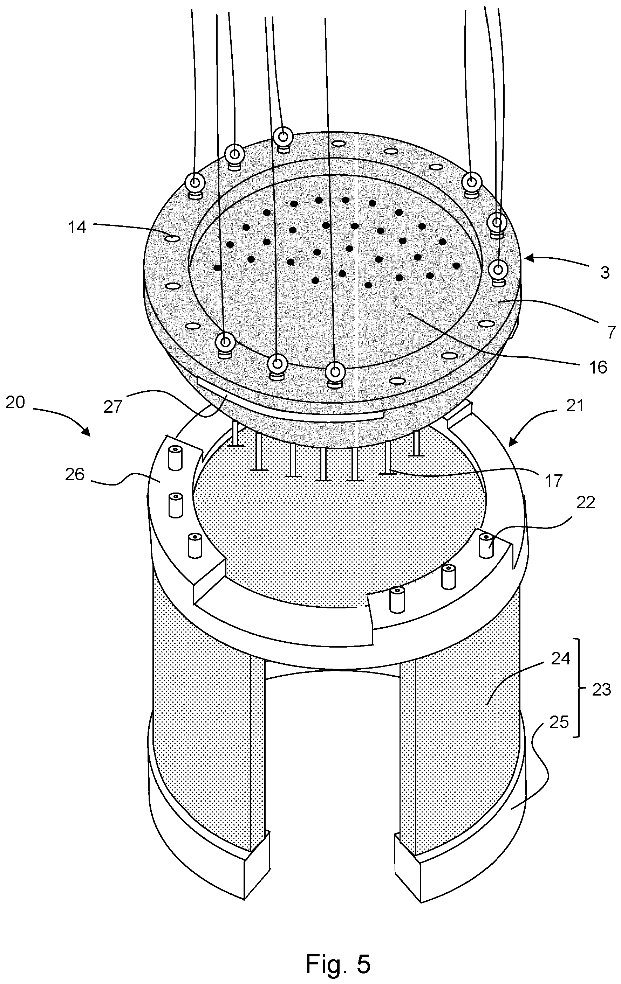

The upstanding projections 22 contain respective threaded holes for fastening thereto of lifting gear eye bolts, or other attachment devices. However, the threaded holes of the first group of projections are differently sized and/or differently threaded compared to the threaded holes of the second group of projections. Because of this, lifting gear fastenable to the first group of projections is not fastenable to the second group of projections, and lifting gear fastenable to the second group of projections is not fastenable to the first group of projections. Accordingly, when the closure head 3 arrives for performance of a manufacturing operation in which it is desired that the head should remain on the first fixture 20 (for example, because the first fixture provides a convenient working platform for the head), lifting gear is fastened to the first group of projections so that not only the head, but also the first fixture is moved into place for the operation. In contrast, when the closure head 3 arrives for performance of a manufacturing operation in which the first fixture is not needed, lifting gear is fastened to the second group of projections (as shown schematically in Figure 5) so that the head, along with the second portions 27 of the support ring 21, but not the rest of the support ring and the underframe 23, is moved into place. When the manufacturing operation is completed, the lifting operation can then be reversed so that the second portions 27 returned to their respective recesses in the first portion 26 of the support ring, and the first group of projections are engaged in their respective holes14 of the annular flange 7.

Because the lifting gear fastening points provided by the first group of projections are differently configured to those provided by the second group of projections, it is possible to arrange the lifting gear for each manufacturing operation to be of matching type depending on whether or not the first fixture 20 is required to be lifted with the closure head 3, thereby ensuring that the correct lifting operation is always performed.

Although Figures 3 and 5 show the first fixture 20 with equal numbers of projections 22 in the first and second groups, this is not necessarily the case. For example, it may be desirable to have more projections in the first group, as the lifting load when lifting the closure head 3 with the first fixture is significantly greater than when lifting without. Additionally or alternatively, to configure the lifting gear fastening points provided by the first group of projections differently from those provided by the second group of projections, the first group of projections may have larger diameter threaded holes for taking larger eye bolts, which eye bolts can carry greater loads. Another option is to have a different integer number (e.g. N = 4) of first and second subgroups of projections.

As well as being used for lifting operations, the threaded holes of the projections 22 can conveniently be used to receive headed bolts for clamping the closure head 3 to the support ring 21 of the first fixture 20 as it is being moved from location to location in a factory.

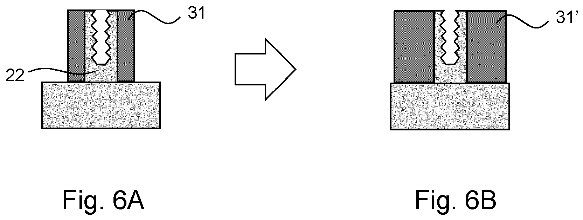

To protect the holes 14 in the peripheral annular flange 7 of the closure head 3, the upstanding projections 22 may carry protective sleeves, e.g. formed of nylon or similar plastic material. However, during some of the manufacturing operations, the holes 14 in the peripheral annular flange 7 of the closure head 3 may be increased in size. To accommodate this, the outer diameters of the sleeves can be increased as needed. For example, Figure 6A shows schematically a projection with a protective sleeve 31 sized for one size of hole, and Figure 6B shows schematically the same upstanding projection with a replacement protective sleeve 31' sized for a bigger hole.

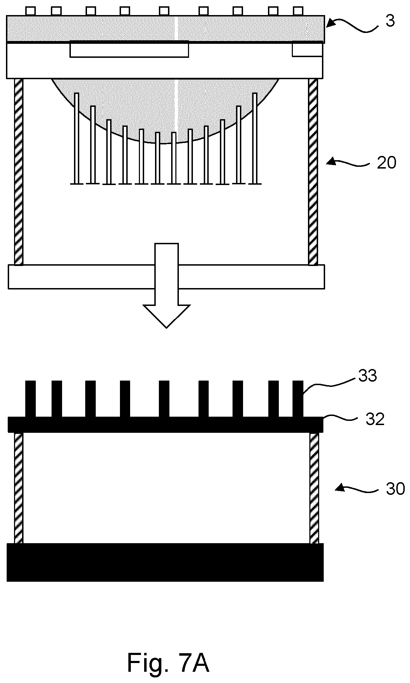

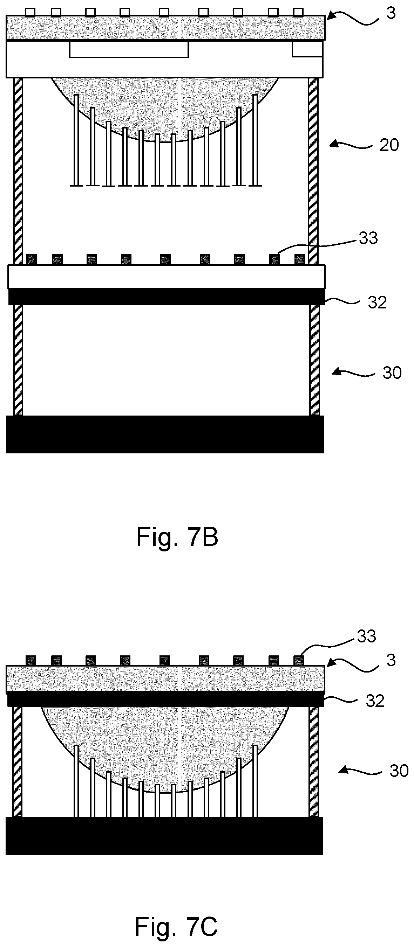

The underframe 23 may be configured so that it can raise the support ring 21 high enough off the ground for all manufacturing operations. Another option, however, is to provide a detachable second fixture 30 onto which the first fixture 20 can be lifted when needed, as shown schematically in Figures 7A and 7B. Advantageously, this arrangement allows the centre of gravity of the closure head 3 to be kept relatively low for operations and transportation movements where the extra height is not needed, which reduces the risk of the head falling accidentally. The second fixture 30 may be specially adapted for the performance of high temperature operations, such as welding, cladding, and heat treatments, and can thus also be introduced as a working platform for such operations. In this case, the second fixture may simply be moved around the factory as a separate item on the guided vehicle or via overhead crane with the first fixture 20 and the closure head. It can then be secured to a manipulator preliminary to mounting the first fixture and the closure head thereonto. Like the first fixture, the second fixture 30 may have trunions (not shown) at its top and bottom ends to facilitate its rotation.

As shown in Figs. 7A and 7B, the second fixture 30 may have at its upper end a second support ring 32 providing a further circumferential row of upstanding projections 33. When the base of the underframe 23 has matching holes, these projections 33 can be used to hold the two fixtures 20, 30 together. For example, the projections 33 can be threaded at their ends to receive bolts that tighten down onto the base of the underframe 23. These bolts can be supplemented with clevis pin type safety devices inserted transversely through the projections 33 to maintain the two fixtures in attachment in the event of bolt thread failure. In addition, however, the projections 33 allow the second fixture 30 to directly support the closure head 3 in its own right, i.e. without intervention of the first fixture 20, as shown in Fig. 7C. This can be advantageous if the second fixture 30 is particularly suitable as a mount for the closure head for certain manufacturing operations.

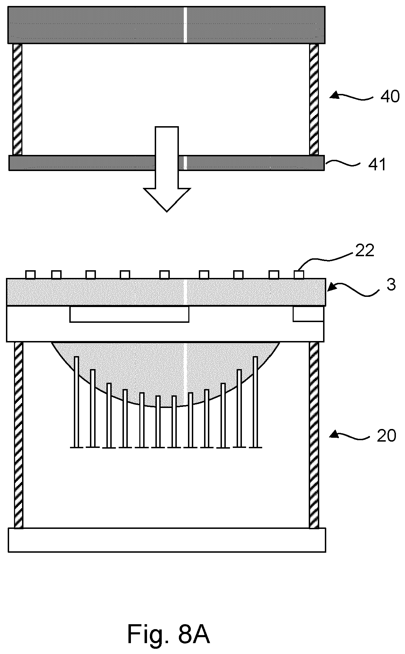

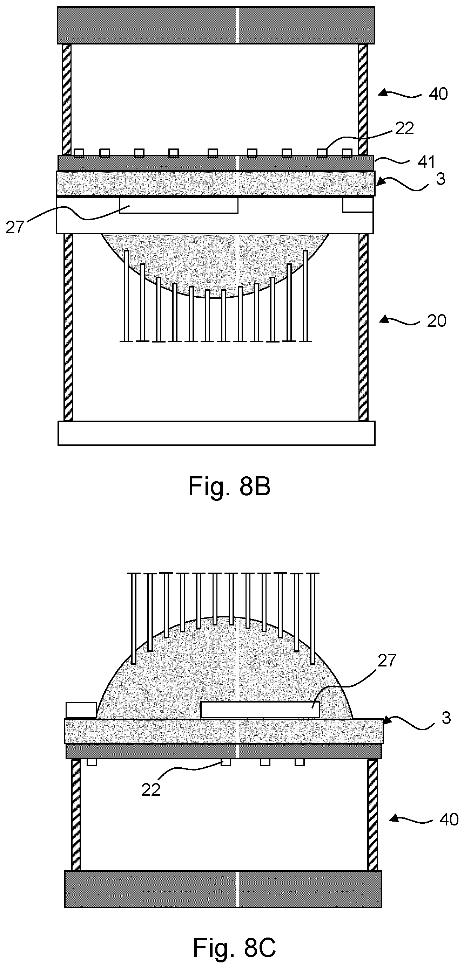

Yet another option is to provide a third fixture 40 which can be lifted to fit over the closure head 3 mounted on the support ring 21 and the underframe 23 of the first fixture 20 so that the third fixture projects upwardly from the closure head, as shown schematically in Figures 8A and 8B. More specifically, the third fixture 40 may have a further support ring 41 with a circumferential row of holes into which the upstanding projections 22 locate. The third fixture can thus protect the top side of the closure head from accidental damage. Moreover, clamping bolts fitted into the threaded holes of the second group of projections provided by the second portions 27 of the support ring 21 allow the third fixture 40, closure head 3 and second portions 27 to be removed from the first fixture 20 and inverted so that the closure head sits on the third fixture 40 with the convex side of the domed portion 16 of the head facing upwards, as shown in Figure 8C. In this orientation, manufacturing operations can be performed on the closure head that would be difficult to perform with the head the other way up. To assist the inversion, the third fixture 40 may have trunions (not shown) at its top and bottom ends. Alternatively to removing the third fixture 40 and closure head 3 from the first fixture 20 before their inversion, clamping bolts fitted into the threaded holes of the first group of projections provided by the first portion 26 of the support ring 21 allows the first fixture 20 to be inverted along with the third fixture 40 and the closure head 3, whereby the first fixture then forms a protective cover over the top side of the closure head.

***

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.
will be understood that the particular value forms another embodiment. The term "about" in relation to a numerical value is optional and means for example +/- 10%.

## Claims

1. A fixture (20) for mounting a closure head (3) of a nuclear reactor pressure vessel during manufacture of the closure head, the closure head having a central section (16) for penetration therethrough by control rod guide tubes (17) and a peripheral section (7) containing a circumferential row of through holes (14) corresponding to positions of bolt holes by which, in use, the closure head is bolted to the reactor pressure vessel, **characterised in that** the fixture has:
a support ring (21) providing a circumferential row of upstanding projections (22) which are matingly engageable through respective holes of the circumferential row of holes of the peripheral section of the closure head to mount the closure head on the support ring; and
an underframe (23) for holding the support ring and closure head mounted thereon off the ground.

2. The fixture according to claim 1, wherein the upstanding projections (22) form fastening points for fastening thereto of lifting gear, whereby lifting performed using lifting gear fastened to the fastening points lifts the closure head.

3. The fixture according to claim 2, wherein the fastening points are threaded holes formed in the upstanding projections for fastening thereto of lifting gear eye bolts.

4. The fixture according to claim 2 or 3, wherein:
a first group of the upstanding projections is provided by a first portion (26) of the support ring which rigidly joins to the underframe, and a second group of the upstanding projections is provided by plural second portions (27) of the support ring which are liftably detachable from the first portion, the first and second groups of upstanding projections forming respectively first and second fastening points for fastening thereto of lifting gear, whereby when a closure head is mounted on the support ring, lifting performed using lifting gear fastened to the first fastening points lifts the closure head as well as the support ring and underframe, and lifting performed using lifting gear fastened to just the second fastening points lifts the closure head and just the second portions of the support ring.

5. The fixture according to claim 4, wherein the first and second fastening points are differently configured such that lifting gear fastenable to the first fastening points is not fastenable to the second fastening points, and lifting gear fastenable to the second fastening points is not fastenable to the first fastening points.

6. The fixture according to claim 5 as dependent on claim 3, wherein the threaded holes formed in the first group of upstanding projections having different threads and/or different diameters to the threaded holes formed in the second group of upstanding projections.

7. The fixture according to any one of claims 4 to 6, wherein the second portions of the support ring are housed in respective recesses formed in the first portion of the support ring.

8. The fixture according to any one of claims 4 to 7, wherein the first group of upstanding projections is formed by an integer number, N, of first subgroups of adjacent upstanding projections, and the second group of upstanding projections is formed by N second subgroups of adjacent upstanding projections, the first and second subgroups being arranged in an alternating pattern around the support ring.

9. The fixture according to any one of the previous claims, wherein the underframe is configured to shield control rod guide tubes penetrating through the central section from accidental damage.

10. A fixture system comprising the fixture according to any one of the previous claims as a first fixture and further comprising a detachable second fixture (30) which holds the first fixture off the ground.

11. A fixture system comprising the fixture according to any one of the previous claims as a first fixture and further comprising a a third fixture (40) which fits over the closure head when the closure head is mounted to the first fixture, the third fixture locating on the peripheral portion of the closure head, and projecting upwardly therefrom.

12. A method of manufacturing a closure head of a nuclear reactor pressure vessel, the closure head having a central section for penetration therethrough by control rod guide tubes and a peripheral section containing a circumferential row of through holes corresponding to positions of bolt holes by which, in use, the closure head is bolted to the reactor pressure vessel, the method including:
mounting the closure head on the support ring of the fixture of any one of claims 1 to 9 by mating the upstanding projections of the support ring through respective holes of the peripheral section of the closure head; and
moving the closure head while mounted on the support ring between manufacturing operations.

13. The method of manufacturing according to claim 12, wherein protective sleeves (31, 31') are placed around the upstanding projections of the support ring before mating the upstanding projections through the holes of the peripheral section of the closure head.

14. The method of manufacturing according to claim 12 or 13, performed with the fixture of claim 4, the method further including:
fastening lifting gear to the first fastening points and lifting thereby the closure head as well as the fixture; and
moving the lifted closure head and fixture to perform a manufacturing operation on the closure head in which the closure head is supported by the support ring of the fixture.

15. The method of manufacturing according to claim 12 or 13, performed with the fixture of claim 4, the method further including:
fastening lifting gear to just the second fastening points and lifting thereby the closure head as well as the second portions of the support ring; and
moving the lifted closure head and second portions of the support ring to perform a manufacturing operation on the closure head.

## Patentansprüche

1. Fixierungselement (20) zum Montieren eines Verschlusskopfes (3) eines Atomreaktordruckgefäßes während des Herstellens des Verschlusskopfes, wobei der Verschlusskopf einen mittleren Abschnitt (16) zum Hindurchtreten von Steuerstabführungsrohren (17) durch diesen hindurch und einen Umfangsabschnitt (7) aufweist, der eine Umfangsreihe von Durchgangslöchern (14) enthält, welche Positionen von Bolzenlöchern entsprechen, durch die der Verschlusskopf im Gebrauch mit dem Reaktordruckgefäß verbolzt ist, **dadurch gekennzeichnet, dass** das Fixierungselement Folgendes aufweist:
einen Haltering (21), der eine Umfangsreihe von nach oben ragenden Vorsprüngen (22) bereitstellt, welche über entsprechende Löcher der Umfangsreihe von Löchern des Umfangsabschnitts des Verschlusskopfes passend in Eingriff bringbar sind, um den Verschlusskopf an dem Haltering zu montieren; und
einen Unterrahmen (23), um den Haltering und den auf diesem montierten Verschlusskopf über dem Boden zu halten.

2. Fixierungselement nach Anspruch 1, wobei die nach oben ragenden Vorsprünge (22) Befestigungspunkte zum Befestigen einer Hebevorrichtung an diesen ausbilden, wobei durch unter Verwendung einer an den Befestigungspunkten befestigten Hebevorrichtung durchgeführtes Heben der Verschlusskopf angehoben wird.

3. Fixierungselement nach Anspruch 2, wobei die Befestigungspunkte Gewindelöcher sind, die in den nach oben ragenden Vorsprüngen zum Befestigen von Hebevorrichtung-Augbolzen an diesen ausgebildet sind.

4. Fixierungselement nach Anspruch 2 oder 3, wobei:
eine erste Gruppe von nach oben ragenden Vorsprüngen durch einen ersten Abschnitt (26) des Halterings, der starr mit dem Unterrahmen verbunden ist, bereitgestellt ist, und eine zweite Gruppe der nach oben ragenden Vorsprünge durch mehrere zweite Abschnitte (27) des Halterahmens, die durch Anheben von dem ersten Abschnitt lösbar sind, bereitgestellt ist, wobei die erste und zweite Gruppe von nach oben ragenden Vorsprüngen jeweils erste und zweite Befestigungspunkte zum Befestigen einer Hebevorrichtung an diesen ausbilden, wobei, wenn ein Verschlusskopf an dem Haltering montiert ist, unter Verwendung einer an den ersten Befestigungspunkten befestigten Hebevorrichtung der Verschlusskopf sowie der Haltering und der Unterrahmen angehoben werden und unter Verwendung einer lediglich an den zweiten Befestigungspunkten befestigten Hebevorrichtung der Verschlusskopf und lediglich die zweiten Abschnitte des Halterings angehoben werden.

5. Fixierungselement nach Anspruch 4, wobei die ersten und zweiten Befestigungspunkte unterschiedlich ausgelegt sind, sodass eine an den ersten Befestigungspunkten befestigbare Hebevorrichtung nicht an den zweiten Befestigungspunkten befestigbar ist und eine an den zweiten Befestigungspunkten befestigbare Hebevorrichtung nicht an den ersten Befestigungspunkten befestigbar ist.

6. Fixierungselement nach Anspruch 5 in Abhängigkeit von Anspruch 3, wobei die in der ersten Gruppe von nach oben ragenden Vorsprüngen ausgebildeten Gewindelöcher unterschiedliche Gewinde und/oder unterschiedliche Durchmesser gegenüber den in der zweiten Gruppe von nach oben ragenden Vorsprüngen ausgebildeten Gewindelöchern aufweisen.

7. Fixierungselement nach einem der Ansprüche 4 bis 6, wobei die zweiten Abschnitte des Halterings in entsprechenden im ersten Abschnitt des Halterings ausgebildeten Vertiefungen aufgenommen sind.

8. Fixierungselement nach einem der Ansprüche 4 bis 7, wobei die erste Gruppe von nach oben ragenden Vorsprüngen durch eine ganze Zahl N von ersten Teilgruppen von benachbarten nach oben ragenden Vorsprüngen ausgebildet ist und die zweite Gruppe von nach oben ragenden Vorsprüngen durch N zweite Teilgruppen von benachbarten nach oben ragenden Vorsprüngen ausgebildet ist, wobei die erste und zweite Teilgruppe in einem abwechselnden Muster um den Haltering herum angeordnet ist.

9. Fixierungselement nach einem der vorangegangenen Ansprüche, wobei der Unterrahmen dazu ausgelegt ist, Steuerstabführungsrohre, die durch den mittleren Abschnitt hindurchtreten, vor versehentlicher Beschädigung zu schützen.

10. Fixierungssystem, umfassend ein Fixierungselement nach einem der vorangegangenen Ansprüche als ein erstes Fixierungselement und ferner umfassend ein lösbares zweites Fixierungselement (30), welches das erste Fixierungselement über dem Boden hält.

11. Fixierungssystem, umfassend ein Fixierungselement nach einem der vorangegangenen Ansprüche als ein erstes Fixierungselement und ferner umfassend ein drittes Fixierungselement (40), welches über den Verschlusskopf passt, wenn der Verschlusskopf an dem ersten Fixierungselement montiert ist, wobei das dritte Fixierungselement an dem Umfangsabschnitt des Verschlusskopfes angeordnet ist und von diesem aus nach oben wegsteht.

12. Verfahren zur Herstellung eines Verschlusskopfes eines Atomreaktordruckgefäßes, wobei der Verschlusskopf einen mittleren Abschnitt zum Hindurchtreten von Steuerstabführungsrohren durch diesen hindurch und einen Umfangsabschnitt aufweist, der eine Umfangsreihe von Durchgangslöchern enthält, welche Positionen von Bolzenlöchern entsprechen, durch die der Verschlusskopf im Gebrauch mit dem Reaktordruckgefäß verbolzt ist, wobei das Verfahren Folgendes umfasst:
Montieren des Verschlusskopfes an dem Haltering eines Fixierungselements nach einem der Ansprüche 1 bis 9, durch Ineingriffbringen der nach oben ragenden Vorsprünge des Halterings durch entsprechende Löcher des Umfangsabschnitts des Verschlusskopfes hindurch; und
Bewegen des Verschlusskopfes, während er an dem Haltering montiert ist, zwischen Herstellungsoperationen.

13. Herstellungsverfahren nach Anspruch 12, wobei Schutzhülsen (31, 31') um die nach oben ragenden Vorsprünge des Halterings herum platziert werden, bevor sie über die Löcher des Umfangsabschnitts des Verschlusskopfes mit den nach oben ragenden Vorsprüngen in Eingriff gebracht werden.

14. Herstellungsverfahren nach Anspruch 12 oder 13, das mit einem Fixierungselement nach Anspruch 4 durchgeführt wird, wobei das Verfahren ferner Folgendes umfasst:
Befestigen einer Hebevorrichtung an den ersten Befestigungspunkten und dadurch Anheben des Verschlusskopfes sowie des Befestigungselements; und
Bewegen des angehobenen Verschlusskopfes und Befestigungselements, um eine Herstellungsoperation an dem Verschlusskopf durchzuführen, bei dem der Verschlusskopf durch den Haltering des Befestigungselements gehalten wird.

15. Herstellungsverfahren nach Anspruch 12 oder 13, das mit einem Befestigungselement nach Anspruch 4 durchgeführt wird, wobei das Verfahren ferner Folgendes umfasst:
Befestigen einer Hebevorrichtung lediglich an den zweiten Befestigungspunkten und dadurch Anheben des Verschlusskopfes sowie der zweiten Abschnitte des Halterings; und
Bewegen des angehobenen Verschlusskopfes und der zweiten Abschnitte des Halterings, um eine Herstellungsoperation an dem Verschlusskopf durchzuführen.

## Revendications

1. Fixation (20) pour monter une tête de fermeture (3) d'une cuve sous pression de réacteur nucléaire pendant la fabrication de la tête de fermeture, la tête de fermeture présentant une section centrale (16) destinée à être traversée par des tubes de guidage de tige de commande (17) et une section périphérique (7) contenant une rangée circonférentielle de trous traversants (14) correspondant à des positions de trous de boulon par l'intermédiaire desquels, en utilisation, la tête de fermeture est boulonnée à la cuve sous pression de réacteur, **caractérisée en ce que** la fixation présente :
une bague de support (21) fournissant une rangée circonférentielle de saillies verticales (22) qui peuvent être mis en prise par appariement à travers des trous respectifs de la rangée circonférentielle de trous de la section périphérique de la tête de fermeture afin de monter la tête de fermeture sur la bague de support ; et
un cadre (23) pour maintenir la bague de support et la tête de fermeture montées sur celui-ci au-dessus du sol.

2. Fixation selon la revendication 1, dans laquelle les saillies verticales (22) forment des points de fixation pour une fixation à celles-ci d'un équipement de levage, moyennant quoi le levage effectué en utilisant un équipement de levage fixé aux points de fixation soulève la tête de fermeture.

3. Fixation selon la revendication 2, dans laquelle les points de fixation sont des trous filetés formés dans les saillies verticales pour une fixation à celles-ci de boulons à œil d'équipement de levage.

4. Fixation selon la revendication 2 ou 3, dans laquelle :
un premier groupe de saillies verticales est fourni par une première partie (26) de la bague de support qui se joint de manière rigide au cadre, et un second groupe de saillies verticales est fourni par une pluralité de secondes parties (27) de la bague de support qui peuvent être détachées par levage à partir de la première partie, les premier et second groupes de saillies verticales formant respectivement des premier et second points de fixation pour la fixation à ceux-ci d'un équipement de levage, moyennant quoi lorsqu'une tête de fermeture est montée sur la bague de support, un levage effectué en utilisant un équipement de levage fixé aux premiers points de fixation soulève la tête de fermeture ainsi que la bague de support et le cadre, et un levage effectué en utilisant un équipement de levage fixé uniquement aux seconds points de fixation soulève la tête de fermeture et uniquement les secondes parties de la bague de support.

5. Fixation selon la revendication 4, dans lequel les premier et second points de fixation sont configurés différemment de telle sorte que l'équipement de levage pouvant être fixé aux premiers points de fixation ne peut pas être fixé aux seconds points de fixation, et l'équipement de levage pouvant être fixé aux seconds points de fixation ne peut pas être fixé aux premiers points de fixation.

6. Fixation selon la revendication 5 lorsqu'elle dépend de la revendication 3, dans laquelle les trous filetés formés dans le premier groupe de saillies verticales présentent des filets différents et/ou des diamètres différents des trous filetés formés dans le second groupe de saillies verticales.

7. Fixation selon l'une quelconque des revendications 4 à 6, dans laquelle les secondes parties de la bague de support sont logées dans des évidements respectifs formés dans la première partie de la bague de support.

8. Fixation selon l'une quelconque des revendications 4 à 7, dans laquelle le premier groupe de saillies verticales est formé par un nombre entier, N, de premiers sous-groupes de saillies verticales adjacentes, et le second groupe de saillies verticales est formé par N seconds sous-groupes de saillies verticales adjacentes, les premier et second sous-groupes étant agencés selon un motif alterné autour de la bague de support.

9. Fixation selon l'une quelconque des revendications précédentes, dans laquelle le cadre est configuré pour protéger les tubes de guidage de tige de commande pénétrant à travers la section centrale à l'encontre d'une détérioration accidentelle.

10. Système de fixation comprenant la fixation selon l'une quelconque des revendications précédentes en tant que première fixation et comprenant en outre une deuxième fixation amovible (30) qui maintient la première fixation au-dessus du sol.

11. Système de fixation comprenant la fixation selon l'une quelconque des revendications précédentes en tant que première fixation et comprenant en outre une troisième fixation (40) qui s'adapte sur la tête de fermeture lorsque la tête de fermeture est montée sur la première fixation, la troisième fixation étant située sur la partie périphérique de la tête de fermeture, et faisant saillie vers le haut à partir de celle-ci.

12. Procédé de fabrication d'une tête de fermeture d'une cuve sous pression de réacteur nucléaire, la tête de fermeture présentant une section centrale destinée à être traversée par des tubes de guidage de tige de commande et une section périphérique contenant une rangée circonférentielle de trous traversants correspondant à des positions de trous de boulon par l'intermédiaire desquels, en utilisation, la tête de fermeture est boulonnée à la cuve sous pression de réacteur, le procédé incluant les étapes consistant à :
monter la tête de fermeture sur la bague de support de la fixation selon l'une quelconque des revendications 1 à 9 en appariant les saillies verticales de la bague de support à travers des trous respectifs de la section périphérique de la tête de fermeture ; et
déplacer la tête de fermeture alors qu'elle est montée sur la bague de support entre des opérations de fabrication.

13. Procédé de fabrication selon la revendication 12, dans lequel des manchons de protection (31, 31') sont placés autour des saillies verticales de la bague de support avant appariement des saillies verticales à travers les trous de la section périphérique de la tête de fermeture.

14. Procédé de fabrication selon la revendication 12 ou 13, réalisé avec la fixation de la revendication 4, le procédé incluant en outre les étapes consistant à :
fixer l'équipement de levage aux premiers points de fixation et soulever ainsi la tête de fermeture ainsi que la fixation ; et
déplacer la tête de fermeture soulevée et la fixation afin d'effectuer une opération de fabrication sur la tête de fermeture dans laquelle la tête de fermeture est supportée par la bague de support de la fixation.

15. Procédé de fabrication selon la revendication 12 ou 13, réalisé avec la fixation de la revendication 4, le procédé incluant en outre les étapes consistant à :
fixer l'équipement de levage uniquement aux seconds points de fixation et soulever ainsi la tête de fermeture ainsi que les secondes parties de la bague de support ; et
déplacer la tête de fermeture et les secondes parties soulevée de la bague de support afin d'effectuer une opération de fabrication sur la tête de fermeture.
